# EUROPEAN PATENT APPLICATION

(11) **EP 2 451 152 A1**
(43) Date of publication of application: **09.05.2012**
(21) Application number: 12152131.4
(22) Date of filing: 07.12.2007
(51) Int. Cl.: H04N 5/76, G11B 27/034, G11B 27/036, G11B 27/00, H04N 21/6587, H04N 21/81, H04N 21/432, H04N 21/458

(54) **Systems and methods for viewing substitute media while fast forwarding past an advertisement**

(30) Priority: 22.12.2006 US 644294
(62) Divisional of application: 11173433.1
(71) Applicant: United Video Properties, Inc., Santa Clara, CA 95050 (US)
(72) Inventor: Craner, Michael L., Chester Springs Pennsylvania 19425 (US); Knee, Robert A., Lansdale Colorado 19445 (US); Ellis, Michael D., Boulder Colorado 80303 (US)
(74) Representative: Korenberg, Alexander Tal

(57) **Abstract**

Systems and methods for displaying substitute media while fast forwarding past advertisements are provided. When a user reaches the advertisement, the interactive media guidance application may receive an instruction to fast forward the advertisement. In response to the fast forward instruction, the interactive media guidance application may identify and display substitute media instead of the advertisement. The substitute media may be an image, a video frame/clip, a graphic, an animated graphic, or any other suitable media. The substitute media may be distributed in the advertisement using any suitable method. For example, the substitute media may be incorporated in the video frames of the advertisement (e.g. overlaid in the video frames of the advertisement), added as hidden video frames distributed in the advertisement, or any other suitable approach. An advertisement tool for creating advertisements that include substitute media, and for previewing advertisements as they are fast forwarded is also provided.

## Description

### Background of the Invention

This invention is directed to systems and methods for fast forwarding past commercials and advertisements when playing recorded media in video or audio entertainment systems.

Interactive media guidance applications, such as interactive television program guides, are well known in the art. Using interactive media guidance applications, users may select and record content that is provided by content providers (e.g., broadcast programs) with a recording device. When a user plays back a recording, the recording includes a recorded program and commercials distributed with the program. Some systems have allowed the user to avoid advertisements using fast forward or skip features. Such features, however, decrease or eliminate the intended effect of the advertisement. As a result, some advertisers have resisted these features because such features waste their advertising dollars.

Approaches have been proposed to allow users to fast forward through an advertisement while still giving advertisers some of the benefit of their dollars. In one approach provided by Tivo corporation (of San Jose, CA), a banner advertisement is displayed while the user fast-forwards through a video advertisement. In another approach provided by OpenTV (of San Francisco, CA), sometimes referred to as a "speed bump" feature an advertiser's logo is displayed during fast-forward. These approaches are limited to overlaying a graphical banner or logo over the video advertisement. Such a banner or logo is a static display that requires additional hardware and advertisement management software in the user's equipment for overlaying the graphic over the underlying video.

Accordingly, it is desirable to provide systems and methods for fast forwarding advertisements while displaying substitute media that is incorporated in the advertisements. It is also desirable to provide a tool for inserting substitute advertising media in an advertisement such that the substitute advertising media is perceptible to the user when the advertisement is fast forwarded.

### Summary of the Invention

In accordance with the principles of the present invention, systems and methods for displaying substitute media (e.g., substitute advertising media) while fast forwarding through advertisements, are provided. In addition, a tool for inserting substitute media in an advertisement such that the substitute media is discernable to the user when the advertisement is fast forwarded is also provided. For purposes of clarity, and not by way of limitation, the present invention may sometimes be described in the context of providing advertisement fast forwarding functionality in videos, such as television programs. It will be understood, however, that the principles of the present invention may be applied to fast forwarding past portions of media for any other suitable media (e.g., audio).

Certain media may be provided to users of interactive media guidance applications such that the users may fast forward the media. For example, a user may fast forward media that is at least partially recorded on a storage device, such as a television program that is recorded with a DVR (either a local DVR or a network DVR). As another example, a user may fast forward media that is cached in a buffer while the user's equipment receives the media (e.g., caching broadcast television, and pausing or rewinding broadcast television on a DVR device). As still another example, a user may fast forward media that is provided from a remote location as a media stream (e.g., a VOD stream provided by a VOD server).

The media that is provided to the user's equipment may include specific content (e.g., television programs) and advertisements. When a user fast forwards the media, the user may also fast forward advertisements, which then lose their advertising value. To maintain advertising value while the user fast forwards, advertisements may be constructed such that an advertising message remains perceptible to the user while the advertisement is fast forwarded. More specifically, advertisements may be constructed to include perceptible substitute media that is displayed in response to a fast forward instruction. The substitute media may be any suitable media or content for providing a substitute message including, for example, a video, a video clip, a graphic, an image, a logo, a video frame, an animated graphic, audio, an audio clip, or any other suitable media.

Advertisements may be constructed in any suitable manner to provide substitute media that is perceptible during fast forwarding. In particular, advertisements may be constructed such that substitute media is only displayed in the video frames that are displayed as part of the fast forward stream. For example, the substitute media may be incorporated as a part of the advertisement that remains perceptible while fast forwarding (e.g., the I frames of an advertisement encoded using the MPEG-2 standard). As another example, video frames of the substitute media may be inserted among the video frames of the advertisement such that the video frames of the substitute media are displayed when the user fast forwards (e.g., as hidden substitute media video frames). As another example, in MPEG-4 systems, the substitute media may be provided as a separate video object plane. In certain embodiments, initiating a fast-forward during an advertisement may cause this formerly hidden object plane to be unhidden (e.g., moved to the front).

Data sources associated with the interactive media system may provide advertisement data that is associated with particular advertisements. The advertisement data as well as substitute media pointed to by the advertisement data may be provided as part of the advertisement stream (e.g., "in-band" to the advertisement video stream), or in a separate or "out-of-band" data stream. The advertisement data may include interactive media guidance application instructions such as, for example, which video frames to display when fast forwarding (e.g., by flagging the particular subset of video frames), the display configuration for the substitute media, whether the user may fast forward past a particular advertisement, permissible fast forward speeds, or any other interactive media guidance application instruction. In some embodiments, the advertisement data may include portions or links to portions of substitute media (e.g., a link to the audio of specific substitute media).

Advertisers may use an advertisement tool to allow an operator to construct an advertisement with substitute media. The advertisement tool may allow the operator to provide an advertisement and/or substitute media, and select device configurations (e.g., firmware and hardware configurations) that can be used to identify the specifics of the fast forward implementation for the device(s) to which the advertisement is targeted. Using the information provided by the operator, the tool may incorporate substitute media in the advertisement using any suitable approach such that the substitute media is displayed when the user fast forwards the advertisement on equipment having the selected configuration. The advertisement tool may include a preview feature that permits the operator to preview the advertisement and substitute media displayed in response to a fast forward request, where the tool allows the operator to specify fast forward rates and device configurations. In some embodiments, the advertisement tool may make suggestions for techniques to use to construct advertisements for optimal display when fast forwarded as a function of the set of devices (e.g., Motorola DCT2000s and DCT2500) or core chipset used to implement the devices(e.g., Broadcom xxx-chip).

### Brief Description of the Drawings

The above and other features of the present invention, its nature and various advantages will be more apparent upon consideration of the following detailed description, taken in conjunction with the accompanying drawings in which:

FIG. 1 is a diagram of an illustrative interactive media system in accordance with one embodiment of the present invention;

FIG. 2 shows an illustrative display screen showing television listings in accordance with one embodiment of the present invention;

FIG. 3 shows an illustrative display screen showing information relating to a television program in accordance with one embodiment of the present invention;

FIG. 4 shows an illustrative display screen showing a television program in full screen after a recording has commenced in accordance with one embodiment of the present invention;

FIG. 5 shows an illustrative display screen showing recorded programs listings in accordance with one embodiment of the present invention;

FIG. 6 shows illustrative video frames of an advertisement displayed while playing the advertisement in accordance with one embodiment of the present invention;

FIG. 7 shows illustrative video frames of substitute media displayed while fast forwarding the advertisement in accordance with one embodiment of the present invention;

FIG. 8 shows an illustrative display screen for playing back a recording in accordance with the principles of the present invention;

FIGS. 9-11 show illustrative display screens for displaying substitute media in response to a fast forward instruction in accordance with the principles of the present invention.

FIG. 12 shows a display screen of an illustrative advertisement tool in accordance with one embodiment of the present invention;

FIG. 13 shows a flow chart of an illustrative process for displaying substitute media in response to a fast forward instruction in accordance with one embodiment of the present invention;

FIG. 14 shows a flow chart of an illustrative process for identifying video frames of substitute media in accordance with on embodiment of the present invention; and

FIG. 15 shows a flow chart of an illustrative process for creating an advertisement that includes substitute media using an advertisement tool in accordance with one embodiment of the present invention.

### Detailed Description

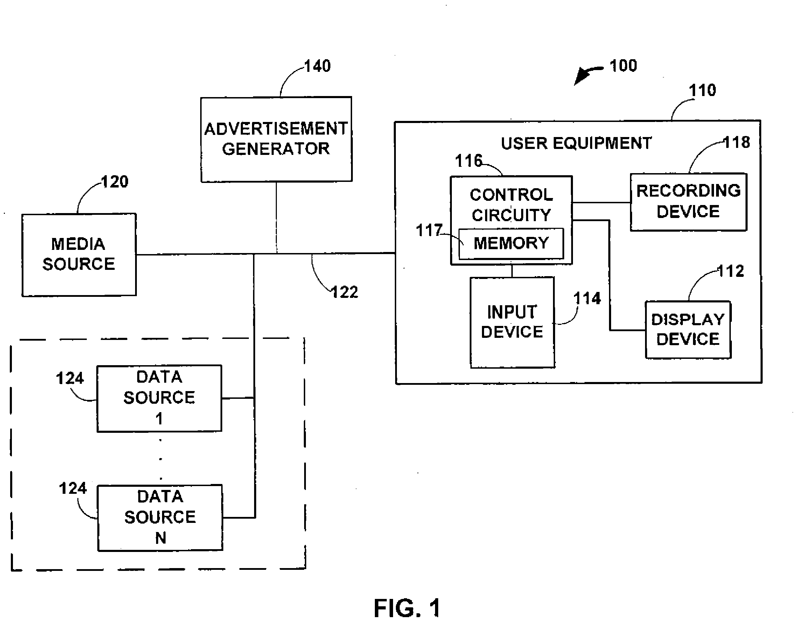

FIG. 1 shows illustrative interactive media system 100 in accordance with one embodiment of the invention. User equipment 110 receives media in the form of signals from media source 120 over communications path 122. In practice there may be multiple media sources 120 and user equipment 110, but only one of each has been shown in FIG. 1 to avoid over-complicating the drawing.

Media source 120 may be any suitable media source such as, for example, a cable system headend, satellite media distribution facility, media broadcast facility, internet protocol television (IPTV) headend, on-demand server (e.g., VOD server), website, game service provider (e.g., for online gaming), or any other suitable facility or system for originating or distributing media. Media source 120 may be configured to transmit signals over any suitable communications path 122 including, for example, a satellite path, a fiber-optic path, a cable path, an Internet path, or any other suitable wired or wireless path. The signals may carry any suitable media such as, for example, television programs, games, music, news, web services, video, or any other suitable media. In some embodiments, media source 120 may include control circuitry for executing requests from a trick-play client or an interactive media guidance application implemented in, for example, user equipment 110 or a VOD server.

User equipment 110 may include any equipment suitable for providing an interactive media experience. User equipment 110 may include television equipment such as a television, set-top box, recording device, video player, user input device, or any other device suitable for providing an interactive media experience. For example, user equipment 110 may include a DCT 2000, 2500, 5100, 6208 or 6412 set-top box provided by Motorola. Inc. In some embodiments, user equipment 110 may include computer equipment, such as a personal computer with a television card (PCTV). In some embodiments, user equipment 110 may include a fixed electronic device such as, for example, a gaming system (e.g., X-Box, PlayStation, or GameCube) or a portable electronic device, such as a portable DVD player, a portable gaming device, a cellular telephone, a PDA, a music player (e.g., MP3 player), or any other suitable fixed or portable device.

In the example of FIG. 1, user equipment 110 includes at least control circuitry 116, display device 112, user input device 114, and recording device 118 which may be implemented as separate devices or as a single device. An interactive media guidance application may be implemented on user equipment 110 to provide media guidance functions to the user for media displayed on display device 112. In some embodiments, the interactive media guidance application may be or include an interactive television application, a trick-play client, or any other application for providing media features to the user.

Display device 112 may be any suitable device such as, for example, a television monitor, a computer monitor, or a display incorporated in user equipment 110 (e.g., a cellular telephone or portable music player display). Display device 112 displays the media transmitted by media source 120 over path 122, and the displays of the trick-play client. Display device 112 may also be configured to provide for the output of audio.

User input device 114 may be any suitable device for interfacing with the interactive media guidance application. For example, user input device 114 may be a remote control, keyboard, mouse, touch pad, touch screen or voice recognition interface. User input device 114 may communicate with user equipment 110 and control circuitry 116 using any suitable communications link. For example, user input device 114 may use an infra-red (IR), radio-frequency, Bluetooth, wireless (e.g., 802.11), wired, or any other suitable communications link.

Control circuitry 116 is adapted to receive user inputs from input device 114 and execute the instructions of the interactive media guidance application. Control circuitry 116 may include one or more tuners (e.g., analog or digital tuners), encoders and decoders (e.g., MPEG decoders), processors (e.g., Motorola 68000 family processors), memory 117 (e.g., RAM and hard disks), communications circuitry (e.g., cable modem circuitry), input/output circuitry (e.g., graphics circuitry), connections to the various devices of user equipment 110, and any other suitable component for providing analog or digital media programming, program recording, and interactive media guidance features. In some embodiments, control circuitry 116 may be included as part of one of the devices of user equipment 110 such as, for example, part of display 112 or any other device (e.g., a set-top box, television and video player).

Recording device 118 may be a personal video recorder (PVR), digital video recorder (DVR), video cassette recorder (VCR), DVD-recorder, compact disc recorder, or any other suitable recording device or storage device. In some embodiments, recording device 118 may be a storage device for storing or recording content or data recorded or provided by other components of interactive media system 100 (e.g., a storage device for caching live television programs to enable trick play functions). Recording device 118 may include one or more tuners, and may be configured to cache media as the user receives it with user equipment 110 (e.g., cache the currently tuned channel) to provide trick-play functions for the user.

In some embodiments, recording device 118 may include a processor (e.g., a microcontroller or microprocessor or the like) that is used to receive and execute interactive media guidance application instructions. Recording device 118 may include memory such as random-access memory for use when executing applications. Nonvolatile memory may also be used to store a boot-up routine or other instructions. A hard disk and other storage in recording device 118 may be used to support databases (e.g., a database of media guidance information for recorded programs, or a database of advertisement information for recorded or cached advertisements). A hard disk or other storage in recording device 118 may also be used to record media such as television programs or video-on-demand content or other content provided to recording device 118.

In some embodiments, recording device 118 may include IR communications circuitry or other suitable communications circuitry for communicating with a remote control (e.g., with user input device 114). Recording device 118 may also include dedicated buttons and a front-panel display. The front-panel display may, for example, be used to display the current channel to which the recording device is tuned.

In some embodiments, recording device 118 may be a network recording device that is located outside of user equipment 110. In some embodiments, the network recording device may be incorporated in content source 120 (e.g., at the head-end of a cable plant), data source 124, a VOD server (not shown), user equipment 110 (e.g., as a second recording device, or a hard drive on a home computer), an Internet server, or any other suitable device. In some embodiments, the network recording device may be a stand alone device (e.g., a commercial network recording device, or a DVR device in a home or neighborhood network). The network recording device may receive instructions to perform recordings from the interactive media guidance application implemented on any of a plurality of instances of user equipment 110.

In some embodiments, the interactive media guidance application may provide features to the user with a client/server approach. There may be one server for each instance of user equipment 110, one for multiple instances of user equipment 110, or a single server may serve as a proxy for each instance of user equipment 110.

Any suitable number of users may have equipment, such as user equipment 110, connected to media source 120, data sources 124 and advertisement generator 140. A single user may also have multiple instances of user equipment 110. But for the clarity of the figure, the equipment of only a single user is shown. The equipment of the plurality of users may be connected to media source 120, data sources 124 and advertisement generator 140 using a cable television network, a satellite television network, a local area network (LAN), a wireless network, the Internet (e.g., using a DOCSIS modem), or any other suitable means. In some embodiments, the equipment of the plurality of users may be connected to each other using any suitable means.

User equipment 110 may receive interactive media guidance application data from one or more data sources 124. Data sources 124 may provide data for a particular type of media or for a particular application. For example, one data source 124 may provide data for non-on-demand media (e.g., non-pay and pay-per-view programs), and another may provide data for on-demand media (e.g., VOD programs). Or, for example, a single data source may provide both of these types of data. For example, one data source 124 may provide data for an interactive media guidance application. Another data source 124 may, for example, provide data for another interactive application (e.g., a home shopping application, and real-time data such as sports scores, stock quotes, news data and weather data). In some embodiments, data sources 124 may provide data to the interactive media guidance application using a client/server approach. There may be one server per data source, one for all sources or, in some embodiments, a single server may communicate as a proxy between user equipment 110 and various data sources 124. In such embodiments, data source 124 may include control circuitry for executing the instructions of the online media guidance application. In some embodiments, data source 124 may be a storage device for storing or recording content or data recorded or provided by other components of interactive media system 100 or by a content or data provider (e.g., a VOD server).

In some embodiments, data source 124 may provide advertisements (e.g., text, graphics and video advertisements for various programs, products, services, and interactive media guidance application features) to the interactive media guidance application. The advertisements may be provided by a dedicated data source, or the advertisements, along with other data, may be provided by one or more data sources.

Data source 124 may provide advertisement data associated with the advertisements using any suitable technique. For example, advertisement data may be distributed in conjunction with transmitted content or media (e.g., incorporated in-band with the media), distributed separately from the transmitted media (e.g., out-of-band in a data stream that accompanies the media stream), or by any other suitable distribution means. In such an approach, the interactive media guidance application may process the in-band or out-of-band media, or process the data stream to obtain the advertisement data (e.g., extract an identifier, instructions, or a URL from a data component within an MPEG-2 transport stream).

The terminology "in-band" and "out-of-band" originally referred to signaling (e.g., within a radio transmission) that which was within or outside of, respectively, the primary radio frequency band. Today, "band" is understood by one skilled in the art to refer to any primary digital or analog conduit for transmission including a channel, stream, tunnel, socket, circuit, virtual circuit, or path whether wired or wireless. In-band advertisement data would thus be understood to be advertisement data that is carried in the same channel, stream, tunnel, socket, etc., as the advertisement for which it is associated or to any primary content feed to which it is associated. An example of in-band carriage of advertisement data in an IP stream would be opening an IP socket between a sending application and a receiving application that is used to carry the advertisement data in addition to a primary content stream (e.g., the video stream of advertisement). An example of out-of-band carriage of advertisement data in an MPEG-2 system would be the carriage of the advertisement data in a digital stream that is carried on an analog carrier at a first frequency and the carriage of the advertisement itself on a carrier at a second frequency, different from the first. In MPEG-2, a single service transport stream (that may be part of a multiple service transport stream) is composed of multiple components including a primary video component, a primary audio component and then one or more data components. If the advertisement data (or substitute media) is carried in one of the primary or secondary video, audio, or data streams, it is considered in-band to the service; if not, it is considered out-of-band to it.

In an MPEG-4 system, in-band advertisement data or substitute media may be carried in a separate video object plane. For ATSC digital video, the concept of the analog vertical blanking interval (VBI) has been expanded to include a digital data in-band VBI equivalent. More information can be found in the International Standard for Organization ISO-13818 standard, entitled Information Technology Generic Coding of Moving Pictures and Associated Audio Information, and the Consumer Electronic Association CEA-708B standard, entitled Digital Television (DTV) Closed Captioning, each incorporated herein by reference in its entirety.

The interactive media guidance application may also obtain the advertisement data associated with the played media by monitoring such as, for example, the channel that the user is viewing. The interactive media guidance application, using this information (e.g., channel information) and the current time, may access a database (e.g., a database in data source 124) that contains the interactive media guidance application data for the channels that are available to the user to obtain the desired advertisement data. For example, when the user is viewing channel five, the interactive media guidance application may check the database and, from the interactive media guidance application data associated with channel five, determine which advertisements will be displayed and the advertisement data associated with those advertisements (e.g., to identify images or video clips associated with the advertisements for channel 5).

Data source 124 may provide a unique identifier associating advertisement data with one or more advertisements. The unique identifiers may be any suitable identifiers such as, for example, an arbitrary number or character string, a word or phrase related to the advertisement (e.g., advertisement title, advertiser name, or product name), time stamp, or any other suitable identifier.

Interactive media system 100 includes advertisement generator 140. Advertisement generator 140 may be configured to provide advertisements that include substitute media to any other element of system 100 including, for example, media source 120 and user equipment 110. In some embodiment, advertisement generator 140 may include an advertisement tool for incorporating advertisement data and/or substitute media in an advertisement. Advertisement generator 140 may also be configured to provide advertisement data as described above in connection with data source 124.

FIG. 1 shows media source 120, data sources 124, and advertisement generator 140 as separate elements. In practice, their functionality may be combined and provided from a single system at a single facility, or multiple systems at multiple facilities. For example, one media source 120 and data source 124 may be combined to provide VOD content and associated VOD data. As another example, a separate data source 124 may be associated with each of a plurality of television broadcasters and may provide data that is specific to those broadcasters (e.g., advertisements for future programming of the broadcasters, or logo data for displaying broadcasters' logos in interactive media guidance application display screens). As still another example, data source 124 and advertisement generator 140 may be combined to provide advertisements that include substitute media and associated advertisement data.

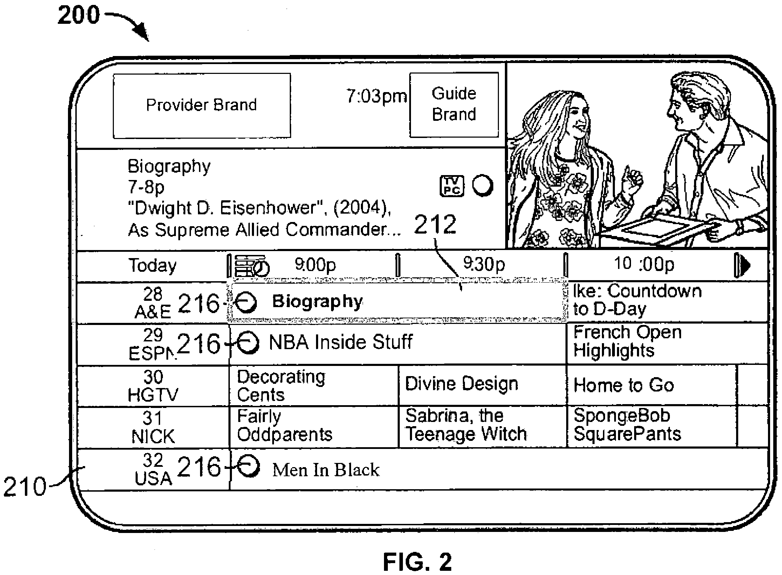

FIG. 2 shows illustrative interactive media guidance application screen 200 that may be displayed on display 112. The user may access interactive media guidance application screen 200 by any suitable means such as, for example, pressing a "menu," "guide," or other suitable key or key sequence on user input device 114, navigating from another interactive media guidance application screen or menu, or by any other means known in the art. Illustrative interactive media guidance application screen 200 contains a grid of program listings 210, which includes program titles, channels and scheduled broadcast times. The screen may include any other suitable program information. In other embodiments, the interactive media guidance application screen may include a list (i.e., a single column) of programs. The user may select a desired program listing with highlight region 212 using user input 116, or any other suitable means.

To schedule a program or other suitable video for recording, a user may highlight a desired program, as shown in FIG. 2 where "Biography" on channel 28 is highlighted, and press a "Record" key or key sequence, or select a "Record" option from the screen using user input device 114 (FIG. 1). Any suitable device from user equipment 110 (FIG. 1), for example recording device 118 (FIG. 1), may record the program. Alternatively, the program may be recorded by any other suitable device that is not part of user equipment 110. In response to receiving an instruction to record the program, the interactive media guidance application may place icon 216 on the listing associated with the selected program to indicate to the user that the interactive media guidance application has scheduled the program for recording (e.g., in FIG. 2, Biography, NBA Inside Stuff and Men In Black are scheduled for recording).

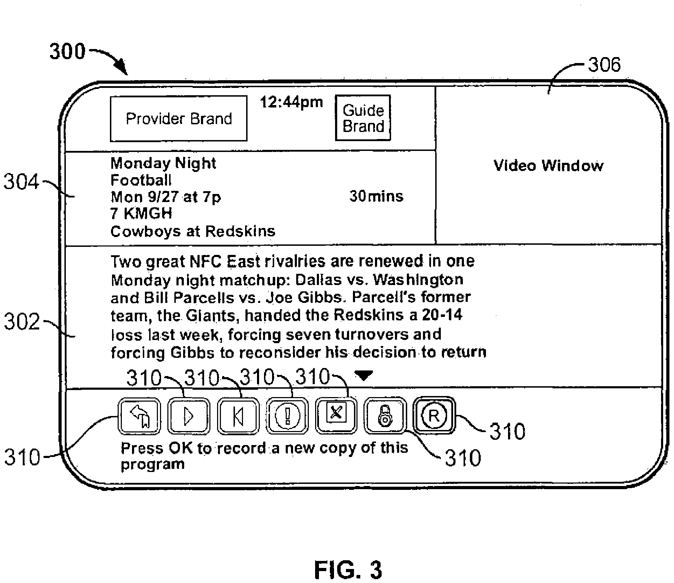

Prior to choosing to record a program, the user may request additional information regarding the program. For example, the user may highlight a listing using highlight region 212 and press an "Information" key or key sequence on user input device 114. In response to receiving the user request, the interactive media guidance application may display an information screen. FIG. 3 shows illustrative information screen 300, which includes detailed information section 302, program description area 304 (including the program title, time and channel), and video window 306. Screen 300 also includes selectable icons 310, some or all of which may include text descriptions. The screen may include options for recording, series recording, parental lock, or any other suitable interactive media guidance application action. If a user determines that he wants to record the program, the user may schedule the recording by pressing a "Record" key or key sequence, selecting a "Record" option from the screen using a user input device (e.g., user input device 114, FIG. 1), or by any other suitable means.

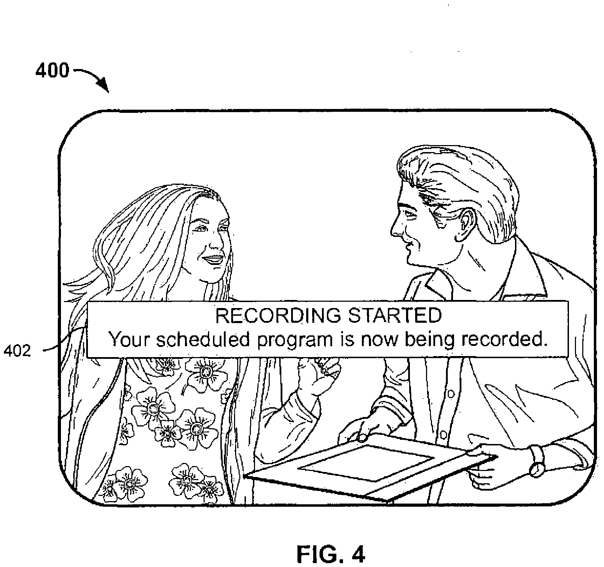

In some embodiments, the user may be watching a program on display device 112 (FIG. 1) in a full screen view, for example full screen view 400 shown in FIG. 4, and decide to record the program. To record the program, the user may press a "Record" key or key sequence on user input device 114 (FIG. 1), or use any other suitable means. A pop-up notice, such as pop-up notice 402, may appear to confirm that recording has begun. Such a notice may also appear in response to receiving a user confirmation to record the program). In some embodiments, pop-up notice 402 may appear automatically when a previously-scheduled recording commences.

The recording device may record a selected program by tuning to the channel or selecting the transport stream of the selected program, and recording all of the media that is transmitted on the channel or transport stream during the scheduled transmission time of the program. The recording device may be located in the user's equipment (e.g., a DVR), or may be a remote server to which the interactive media guidance application has access (e.g., network DVR). The recorded media may thus include the selected program, and advertisements displayed during breaks in the program (e.g., during commercial breaks of a sporting event, or every 10 or 15 minutes of a series).

In some embodiments, the recording device may be configured to cache the programs that the user views. For example, the recording device may be configured to cache only specific channels (e.g., favorite channels), or the recording device may be configured to cache the channel that the user is watching. The cached programs may be available for playback using trick play instructions (e.g., pause, rewind, fast forward). If an entire program is stored in a cache, the recording device may save the cached program as a recording.

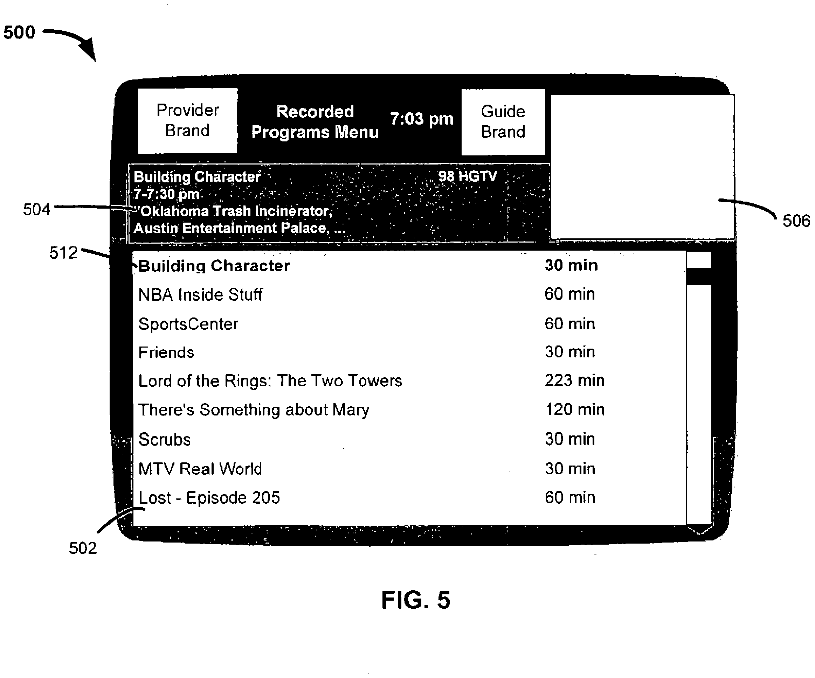

Once the recording device has recorded selected programs, the user may direct the interactive media guidance application to display listings of the recorded programs that the user may select for playback. For example, the user may access a recorded programs menu by pressing a "Recorded Programs Menu" key or key sequence, navigating from another interactive media guidance application screen (e.g., selecting a "Recorded Programs Menu" option from an interactive media guidance application screen using user input device 114, FIG. 1), or by any other suitable means. Recorded programs menu 500, shown in FIG. 5, shows an illustrative display of recorded program listings. Menu 500 includes
recordings listings 502, detailed information section 504 and video window 506. Listings 502 include the program title and program length. The listings may include any other suitable information (e.g., channel number or date recorded). In some embodiments,
menu 500 may include listings for cached programs and listings for programs stored remotely but not recorded by the user (e.g., VOD programs), or such programs may be listed on additional, separate screens.

To play back a recording, the user may select the listing (e.g., using highlight region 512) associated with the recording from listings 502 and press a "Play" key or key sequence on the user input device, select a play option from an interactive media guidance application screen, or perform any other suitable step to initiate playback. The user may alternatively press an "information" key or the like to cause an information screen to be displayed (such as information screen 300 of FIG. 3) and select a "Play" icon from the information screen. In response to the user request, the interactive media guidance application may direct the user's equipment to play back the recording by, for example, directing the recording device (e.g., recording device 118) to provide the appropriate video and audio streams to the display device (e.g., display device 112) to display the selected recording.

Many programs are recorded or cached with advertisements. When such programs are played back, the recorded advertisements may also be played back as part of the recording. To avoid viewing an advertisement, the user may fast forward past the advertisement. In some embodiments, the user may also fast forward past advertisements when trick playing a program or fast forward past the advertisements in a DVD. For example, after pausing, the user may resume play back and fast forward past advertisements until the user reaches the end of the cache. The principle of this invention, displaying substitute media while fast forwarding suitable content (e.g., recordings, cached media or on-demand media), can be applied to non-advertisement media as well. For simplicity however, the following discussion will be limited to recorded advertisements. It will be understood, however, that the embodiments and features discussed may also be implemented in the context of on-demand media and of media that is not an advertisement. Particular embodiments specific to cached media and on-demand media embodiments will also be described in more detail below.

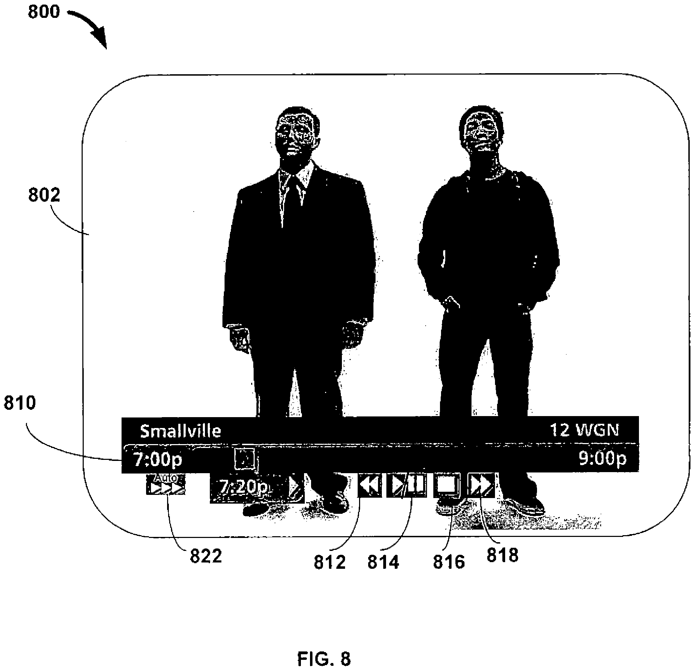

The user may instruct the interactive media guidance application to fast forward the recording, for example to fast forward past an advertisement, in any suitable manner. For example, the user may press or press and hold a "fast forward" key on the user input device (e.g., user input device 114, FIG. 1) to initiate fast forwarding. As another example, the user may select a fast forward option from a transport control bar (e.g., transport control bar 810 discussed below in connection with FIG. 8). The interactive media guidance application may then fast forward the display of the recording (e.g., by displaying every other frame, every third frame, every tenth frame, or every n-th frame) until the user instructs the interactive media guidance application to resume playback of the recording.

In some embodiments, the playback stream may be a video encoded using the MPEG-2 standard. An MPEG-2 video stream consists of a series of data frames encoding pictures. The frames may be encoded as intra-coding frames (I frames), forward prediction frames (P frames), and bidirectional prediction (B frames). The stream is transmitted as a series of I, P, and B frames organized in a GOP (Group Of Pictures) structure, where the GOP typically begins with an I frame, ends just prior to the subsequent I frame, and includes 12-15 frames. For example, the frame sequence for the advertisement may be IBBPBBPBBPBBP.

A video is first encoded with an I-frame. The I-frame includes all of the image of the video frame, but may be compressed by exploiting spatial redundancy in the image. The I-frame is followed by P and B frames, which only include the difference in the video between the past frame and the current frame (P frame), and the difference between the past frame, current frame, and following frame (B frame). By representing a video in such a manner, the video may be transmitted in an efficient and bandwidth-sensitive manner.

To fast forward an MPEG-2 playback stream, the interactive media guidance application may display the I frames and only a subset of the B and P frames of the GOP (e.g., only the P frames). In some embodiments, the interactive media guidance application may display only the I frames (e.g., when the user is fast forwarding at 12-15x, or repeat the display of each I-frame to fast forward at a lower speed).

To ensure that an advertisement is not lost when it is fast forwarded, advertisers may construct advertisements such that information (i.e., substitute media) is displayed while the user fast forwards past the advertisement. The substitute media that is displayed may be configured to appear and persist in the viewer's field (e.g., be perceptible to the user) even or only during the fast forward. In some embodiments, the substitute media may be a substitute advertisement.

The substitute media displayed while fast forwarding an advertisement may be any suitable media. For example, the substitute media may include an image (e.g., gif, jpeg, or MPEG I-frame), an identifier for a video frame of the advertisement, a video clip, an element that is repeated across a number of displayed video frames, or any other suitable media for displaying while fast forwarding an advertisement. The substitute media may be provided as part of a video frame of the advertisement (e.g., overlaid onto frames of the advertisement), or as a separate video frame incorporated in the advertisement (e.g., as frames added to the advertisement).

The interactive media guidance application may identify the video frames that include substitute media in any suitable manner. For example, advertisement data associated with the advertisement may identify the specific video frames of the substitute media. The advertisement data include, for example, identifiers, URLs, interactive media guidance application commands, metadata, images or video clips (or links therefore), flags (e.g., for video frames that include substitute media or to identify the video frames from which to begin displaying substitute media) or any other suitable data.

In such cases, prior to or in response to an instruction to fast forward, the interactive media guidance application may retrieve advertisement data associated with the currently played back recording, and determine the video frames of the substitute media from the advertisement data based on the references to the video frames of the substitute advertisement in the advertisement data. The interactive media guidance application may then, in response to the fast forward instruction, display the identified video frames.

As another example, each video frame of the advertisement that includes substitute media may be identified using a flag or another such mechanism. In such cases, in response to an instruction to fast forward, the interactive media guidance application may run through the video frames of the advertisement and identify and display the video frames that are flagged.

The interactive media guidance application may display each identified video frame for any suitable time that may be determined from the fast forward rate and the distribution of identified video frames in the advertisement. For example, the interactive media guidance application may determine how many video frames were skipped before reaching the current identified video frame. If the fast forward rate is substantially equal to the number of skipped frames (e.g., skipped 9 frames, and fast forward rate is 8x), the interactive media guidance application may display the identified frame for only one display interval (e.g., 1/30 of a second if 30 frames are displayed per second). If the fast forward rate is less than the number of skipped frames (e.g., skipped 25 frames and fast forward rate is 8x), the interactive media guidance application may display the identified video frame for a number of display intervals that corresponds to the number of skipped frames (e.g., for 3 display intervals). If the fast forward rate is more than the number of skipped frames (e.g., skipped 4 frames and fast forward rate is 8x), the interactive media guidance application may skip one or more identified video frames. In some embodiments, the allowable fast forward rates may be limited for the duration of the advertisement based on the substitute media. For example, the interactive media guidance application may generally support fast forward rates of 2x, 4x, 8x, and 16x, but during a particular advertisement may only support 2x and 4x. In this situation, if the user has previously selected a 16x fast forward speed, the interactive media guidance application may automatically reduce it to 4x for the duration of the advertisement and automatically restore it to 16x when the end of the advertisement (and substitute media) has been reached.

In some embodiments, the interactive media guidance application may display substitute media for only one or more fast forward rates (e.g., 8x but not 2x). The determination of whether or not the fast forward rate supports substitute media may be advertisement specific, and identified in advertisement data associated with each advertisement.

If the first video frame of substitute media is not immediately next in the playback stream, the interactive media guidance application may delay the fast forward instruction until it reaches the next identified video frame, or the interactive media guidance application may display the video frames that would normally be displayed in response to a fast forward instruction until it reaches the next substitute media video frame, or the interactive media guidance application may immediately skip to the first video frame of substitute media.

In some embodiments, the substitute media may include audio. For example, the substitute media may be an image or video accompanied by audio, or the substitute media may be only audio. The audio may be provided in any suitable manner including, for example, a substitute audio stream (e.g., recorded or on-demand), audio data incorporated with the image or video (e.g., in a side band, out of band, as a secondary audio program or private data audio stream, or in the VBI), or in any other suitable manner.

Substitute media may be incorporated in the advertisement in any suitable manner. For example, the substitute media may be a portion of the advertisement, such as the last few seconds of the advertisement. The portion may be selected because it presents a concentrated advertisement pitch or catch phrase that the advertiser feels is effective. Then, in response to an instruction to fast forward the advertisement, the interactive media guidance application automatically jumps to the beginning of the selected portion of the advertisement, and plays back the portion of the advertisement at normal playback speed while still giving the user some indication that the advertisement fast-forward is still in progress (e.g., graphic overlay indicating "commercial fast-forward in progress"). When an instruction to stop fast-forwarding is received, the interactive media guidance application may identify the video frame that the user would have reached had it not displayed the substitute media (e.g., by comparing the number of displayed video frames at the fast forward rate) and resume playback from the identified video frame.

As another example, substitute media may be incorporated in the advertisement using hidden video frames. The principle behind this approach is persistence of vision, by which the perceptual process of the brain retains an image for a brief moment, and therefore cannot perceive each individual frame that is displayed in the advertisement. Substitute media may be incorporated in additional frames that are not part of the advertisement and that are distributed throughout the advertisement such that the additional video frames are not individually perceptible at playback speed (i.e., 1x rate). In response to a fast forward instruction, the additional video frames are displayed substantially closer in time (e.g., one after the other) or repeated for emphasis such that the video frames, and the substitute media the video frames depict, becomes perceptible or emphasized. In some embodiments, the interactive media guidance application may feed the hidden frames to an encoder for real-time encode such that the playback of the substitute media is smooth.

The substitute media incorporated in hidden video frames may be provided with audio, for example from a substitute audio stream. As another example, the audio for the substitute media may be included in the hidden video frames (e.g., in the VBI of each video frame).

The following example will serve to illustrate this approach. Using the MPEG-2 algorithm, an advertisement may be encoded as a series of GOPs. The video frames of substitute media may be inserted, encoded as I-frames (e.g., frame Ih), as single I-frames between GOPs. The frame sequence for the advertisement with hidden video frames may then be, for example, IBBPBBPBBPBBP Ih IBBPBBPBBPBBP IBBPBBPBBPBBP Ih IBBPBBPBBPBBP Ih ... During normal playback, the Ih frames may or may not be displayed, but even if they are displayed, are marginally or not perceptible to the user. In response to an instruction to fast forward the advertisement, the interactive media guidance application may identify the hidden I frames of the substitute media (e.g., identify the Ih frames using a flag) and sequentially display the identified hidden I frames. The duration of the display of each hidden I frame may also be determined automatically or via additional information provided in the advertisement data.

As another example to illustrate this approach, an MPEG-4 system may be used. In such an embodiment, the substitute media may be provided as a separate video object plane. Then, in response to a fast forward instruction, the interactive media guidance application may identify the separate video object plane (e.g., from advertisement data) and display the formerly hidden object plane (e.g., move the display plane to the front). In a variant of this example, the separate video object plane may be visible but occupy only a small region of the screen during normal playback, but in response to a fast forward instruction, the video object plane may be scaled to partially or completely fill the screen.

As still another example, substitute media may be incorporated in an advertisement by starting with the substitute media, and constructing an advertisement around the existing substitute media. For example, an advertiser may begin by creating substitute media (e.g., a video clip), and then add additional video frames in between the video frames of the substitute media such that the combination of the substitute media video frames and additional video frames forms an advertisement. The additional video frames may be related to the substitute media (e.g., such that the video frames of the substitute media appear to be parts of the advertisement, the same as the additional video frames), or they may be unrelated to the substitute media (e.g., the video frames of the substitute media are like hidden frames that are imperceptible to the user unless the advertisement is fast forwarded). In some embodiments, the substitute media may include a marginally noticeable element of the screen that is scaled up to fill a substantial portion of the screen during fast forward.

In still another example, some or all of the substitute media (video clips, audio clips, still images, and the like) may be preloaded and stored locally (e.g., to a hard disk drive) and replayed from the local storage when the user attempts to fast forward through a designated advertisement.

As a final example, substitute media may be incorporated in an advertisement by adding elements to particular video frames of the advertisement (e.g., substitute media is overlaid on the particular video frames), or by creating the advertisement with particular elements incorporated in the particular video frames that are displayed in response to a fast forward instruction (e.g., substitute media is part of the particular video frames). For example, an advertisement may include an element that is displayed substantially at the same position in the particular video frames that are displayed in response to a fast forward instruction, or the element may be displayed at positions in the particular video frames that show substantially continuous movement of the element.

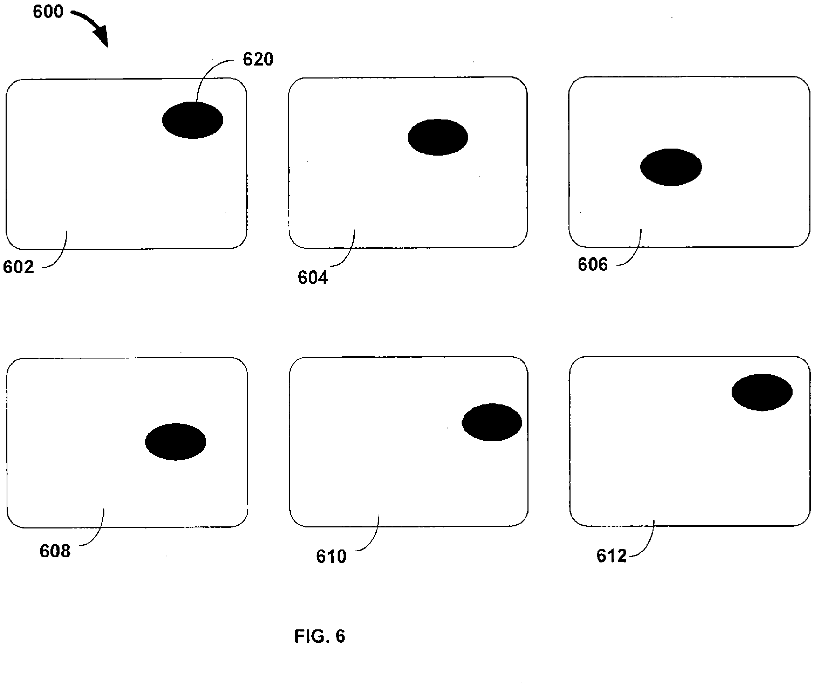

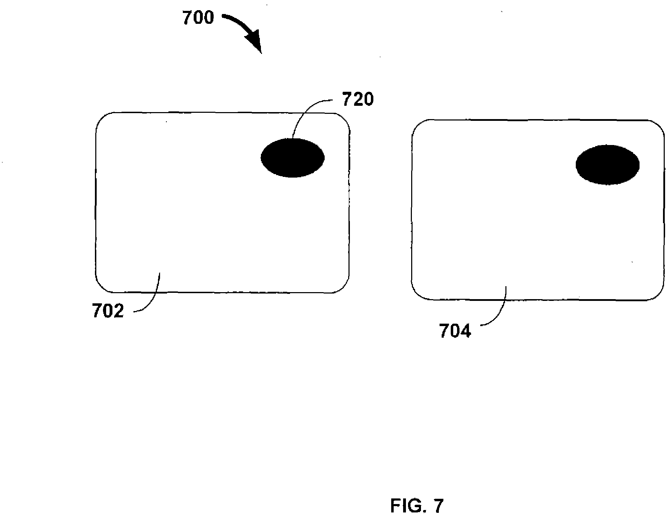

The following example will illustrate this embodiment. Collection 600 of video frames of an advertisement is shown in FIG. 6. Each of consecutive frames 602, 604, 606, 608, 610 and 612 of the advertisement include element 620. Element 620 may be a graphic (e.g., a logo), a product being advertised (e.g., a soft drink), an eye catching image (e.g., a model), or any other suitable image included in the advertisement. When the user fast forwards the advertisement, the interactive media guidance application may display only a subset of video frames, for example video frames 702 and 712 when fast forwarding at 5x. This is shown in collection 700 of video frames, shown in FIG. 7. Collection 700 includes video frames 702 and 704, which correspond to video frames 602 and 612 of FIG. 6. Element 720 of video frames 702 and 704 is substantially displayed in the same position, which allows element 720 to persist in the user's field long enough for the user to recognize the element and understand the message articulated by the advertiser using the substitute media. In this embodiment, a portion of the video screen may be made coherent while the substitute media is displayed and other portions of the video screen may not be explicitly coordinated.

FIGS. 8-11 show illustrative displays of an advertisement and configurations for displaying associated alternative media when a user fast forwards the advertisement. FIG. 8 shows illustrative display screen 800 that includes video 802 and transport control bar 810, which includes navigation control options 812 (rewind), 814 (play/pause), 816 (stop) and 818 (fast forward). In the example shown in FIG. 8, the interactive media guidance application is displaying an advertisement for Mac computers.

In some embodiments, the interactive media guidance application may provide the user with an auto fast forward function. The auto fast forward function may be configured to automatically fast forward all advertisements in a recording or video stream. The user may enable this function in any suitable manner including, for example, selecting an on-screen option (e.g., option 822), press a key or key sequence on a user input device (e.g., user input device 114, FIG. 1), in a setup menu, or using any other suitable approach. Similarly, the user may disable the auto fast forward feature in a similar manner. To determine when to fast forward, the interactive media guidance application may identify the advertisements in any suitable manner such as, for example, from associated advertisement data or broadcast flags. In some embodiments, auto fast forward may be configurable on a show-by-show, channel-by-channel basis, advertiser-by-advertiser basis, or based on whether or not a show meets a certain set of criteria or in any other suitable manner. For example, auto fast forward may only be available for advertisements which provide substitute media.

The interactive media guidance application may display substitute media in any suitable configuration. Advertisement data associated with each advertisement may specify which specific configuration is to be used for displaying substitute media. For example, advertisement data may identify a configuration that includes additional media (e.g., banner or panel advertisements) displayed with the substitute media. The advertisement data may include or identify the additional media that is displayed in such a configuration. The additional media may include an image (e.g., gif, jpeg, or MPEG I-frame), an identifier for a video frame of the advertisement or recording, a series of images forming a shortened advertisement, a video clip, a panel or banner advertisement, or any other suitable media.

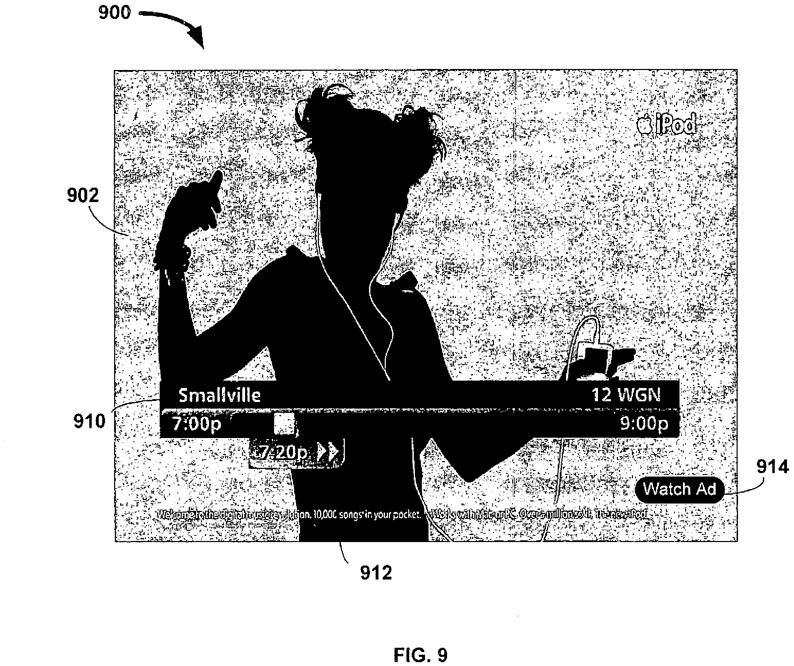

FIG. 9 shows illustrative display screen 900 of substitute media displayed in response to an instruction to fast forward an advertisement. Display screen 900 includes full screen overlay 902 of substitute media that is displayed instead of the recorded advertisement (e.g., video 802, FIG. 8). In the example of FIG. 9, overlay 902 depicts the well-known shadow dancer that is an easily recognized icon of the advertising campaign of the iPod media player consumer product of Apple Computer, Inc., of San Jose, California. It also depicts the iPod logo.

Screen 900 includes transport control bar 910, which includes fast forward icon 912 to indicate to the user that the interactive media guidance application is fast forwarding the current advertisement. If the user decides, while the substitute media is displayed, to view the advertisement in its entirety, the user may select an option to view the advertisement, for example option 914. This option may serve as a shortcut for the user (e.g., replacing the need for the user to rewind back to the beginning of the advertisement and start it from the beginning once it has been fully or partially skipped through).

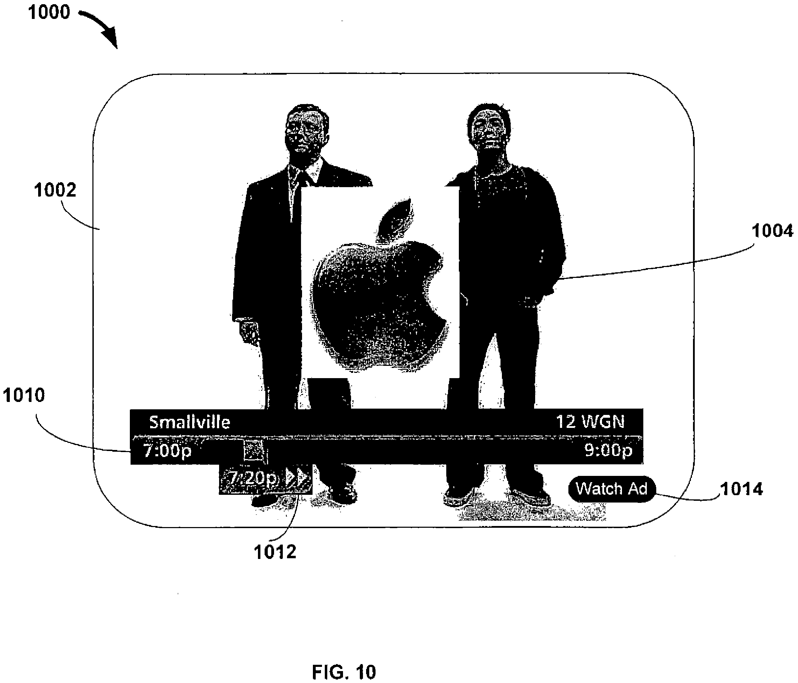

FIG. 10 shows another illustrative configuration for displaying substitute media. Display screen 1000 includes partial overlay 1004 of substitute media that is displayed over video stream 1002. The interactive media guidance application may display any suitable portion of a video or recording (e.g., the advertisement), or any other suitable image or graphic in video 1002. For example, the interactive media guidance application may continue to display the video frame that was displayed when the fast forward instruction was received. As another example, the video frames of the substitute media may include the substitute media in an overlay (e.g., overlay 1004) over the advertisement. As still another example, the interactive media guidance application may display an interactive media guidance application graphic.

Screen 1000 includes transport control bar 1010, which includes fast forward icon 1012 to indicate to the user that the interactive media guidance application is fast forwarding past the current advertisement. If the user decides, while the substitute media is displayed, to view the advertisement in its entirety, the user may select an option to view the advertisement, for example option 1014. This option may serve as a shortcut for the user (e.g., replacing the need for the user to rewind back to the beginning of the advertisement and start it from the beginning once it has been fully or partially skipped through).

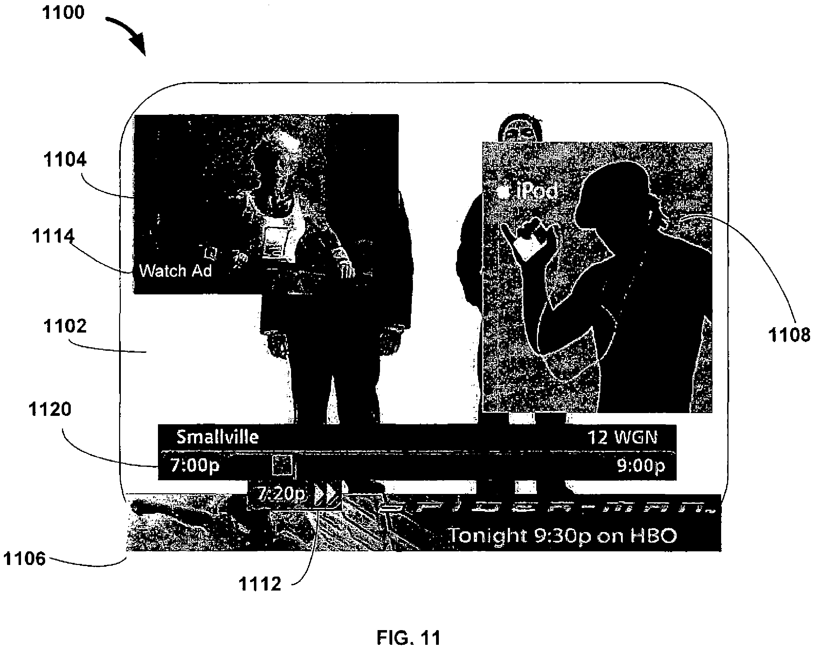

FIG. 11 shows still another illustrative configuration for displaying substitute media. Display screen 1100 includes picture-in-picture (PIP) window 1104 that is simultaneously displayed with or over main window 1102 (e.g., used to display the recording). The PIP window may be automatically displayed in response to a user instruction to fast forward an advertisement. The interactive media guidance application may display the substitute media in one of the PIP window or in the main window, and the advertisement (e.g., a recording) in the other. Similarly to the example of FIG. 10, the interactive media guidance application may display any suitable portion of the recording, or any other suitable image or graphic in main window 1102 or PIP window 1104.

Screen 1100 may include one or more additional advertisements. For example, screen 1100 includes banner ad 1106 and panel ad 1108. The advertisements of banner ad 1106 and panel ad 1208 may be for products or services related to the skipped advertisement, or to other products or services not related to the fast forwarded advertisement. In the example shown in FIG. 11, the skipped advertisement is an advertisement for Mac computers. The advertisement displayed in PIP window 1104 is a short video advertisement for Apple, Inc. The advertisement of panel ad 1108 is an advertisement for the iPod. The advertisement of banner ad 1106 is for a program that the user may view on user equipment 110 (FIG. 1). In some embodiments, the user may select banner ad 1106 and/or panel ad 1208 to view additional information, order a product or service, perform an interactive media guidance application function (e.g., schedule a recording or a reminder), or any other suitable action. The interactive media guidance application may display the banner and/or panel ads as overlays in response to receiving the request to fast forward past the advertisements. In some embodiments, the interactive media guidance application may determine which panel and banner advertisements (and other media) to display from advertisement data associated with the advertisement displayed in the video stream.

Screen 1100 includes transport control bar 1110, which includes fast forward icon 1112 to indicate to the user that the interactive media guidance application is skipping the current advertisement. If the user decides, while the substitute media is displayed, to view the advertisement in its entirety, the user may select an option to view the advertisement, for example option 1114. This option may serve as a shortcut for the user (e.g., replacing the need for the user to rewind back to the beginning of the advertisement and start it from the beginning once it has been fully or partially skipped through).

In some embodiments, an advertisement tool may be provided to assist the user in integrating substitute media and advertisements. In particular, it may be burdensome and difficult for advertisers to identify the specific video frames that are displayed in response to a fast forward instruction, as it may depend on the time at which the fast forward instruction is received (e.g., the video frame displayed at that time), the hardware used by the user (e.g., the chipset of the set-top box or DVR), the firmware or software implemented on the user's equipment, the format of the advertisement (e.g., analog content or MPEG-2 stream), as well as other factors. The advertisement tool (e.g., a software program) may be configured to automatically identify the video frames that will be displayed in response to a fast forward instruction for operators (e.g., advertisers).

In addition to merely identifying the video frames displayed in response to a fast forward instruction, the advertisement tool may also be configured to assist an operator in constructing an advertisement with substitute media provided in the identified video frames and previewing the results on various target platforms under various fast forward speeds. The advertisement tool may be configured to, either automatically or in response to an operator instruction, incorporate or add substitute media to the video frames that are displayed in response to a fast forward instruction in any suitable manner including, for example, any of the manners described above. For example, an operator may provide at least one of the advertisement and substitute media to the advertisement tool, and combine the substitute media and the advertisement, create substitute media in the advertisement, or create an advertisement from the substitute media using the advertisement tool.

Because the video frames that are displayed in response to a fast forward instruction may depend on the configuration of the user's equipment, the advertisement tool may include an emulating feature that is configured to emulate the fast forward algorithms of a plurality of configurations of users' equipment. For example, the advertisement tool may include data related to hardware, firmware and software that controls the display of a fast forwarded program. When the operator uses the advertisement tool to incorporate substitute media in an advertisement, the operator may select one or more configurations of users' equipment and direct the advertisement tool to ensure that the substitute media is perceptible during fast forwarding on the specified configurations of users' equipment (and, in some embodiments, that it is not perceptible during normal playback). In some embodiments, the advertisement tool may include a default configuration of users' equipment that corresponds to a plurality of configurations of users' equipment (e.g., the most popular configurations).

The advertisement tool may also include a preview feature for the operator to preview an advertisement as it is fast forwarded (as well as during normal playback). The preview feature may allow operators to select configurations of users' equipment to preview the display of substitute media on the selected configurations. The preview feature may also allow operators to select fast forward rates and/or the specific video frame at which the fast forward instruction is received. The preview feature may allow operators to modify or optimize the substitute media and its placement in the advertisement for maximal effect.

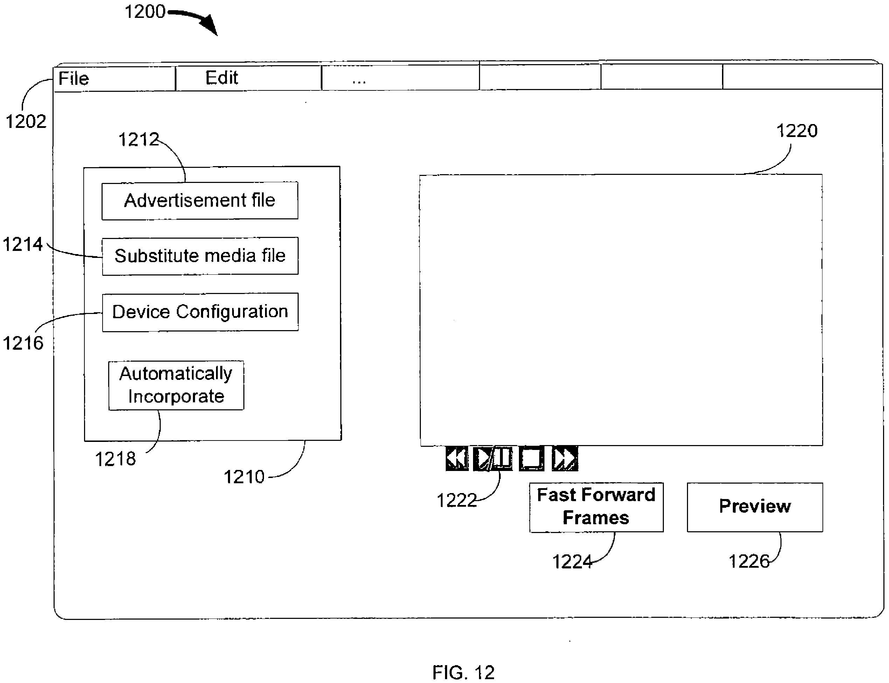

FIG. 12 shows a display screen of an illustrative advertisement tool. Display screen 1200 includes menus 1202, advertisement portion 1210, and preview window 1220. Menus 1202 may include any typical menus of a software program such as, for example, file, edit, format, tools or any other suitable menu options. In some embodiments, menu 1202 may include an option for specifying the approach to use for incorporating substitute media in an advertisement (e.g., hidden video frames or adding substitute media in existing advertisement video frames).

The operator may select an advertisement using advertisement file portion 1212, substitute media using substitute media portion 1214, and a device configuration using device configuration portion 1216. Portions 1212, 1214 and 1216 may display the identified advertisement, substitute media, or configuration, respectively, in any suitable manner including, for example, text, images, video clips, or any other suitable manner. In some embodiments, the operator may leave one of the advertisement and substitute media portions empty, and create the missing advertisement or substitute media using that advertisement tool.

The operator may direct the advertisement tool to automatically incorporate the substitute media identified in portion 1214 into the advertisement identified in portion 1212 by selecting option 1218. Alternatively, the advertisement tool may assist the operator in manually incorporating the substitute media in the appropriate video frames of the advertisement. For example, the operator may direct the advertisement tool to identify the video frames that are displayed in response to a fast forward instruction, for example by selecting fast forward frames option 1224). The advertisement tool may display the identified frames in preview window 1220, and allow the operator to incorporate substitute media in the displayed video frames, for example by placing substitute media (e.g., substitute media from portion 1214) in the displayed video frame.

The operator may play back an advertisement in which substitute media was incorporated using playback controls 1222. The operator can further preview the advertisement when it is fast forwarded using preview option 1226, and determine whether the substitute media was properly incorporated in the advertisement (e.g., if the substitute media persists when the user fast forwards the advertisement).

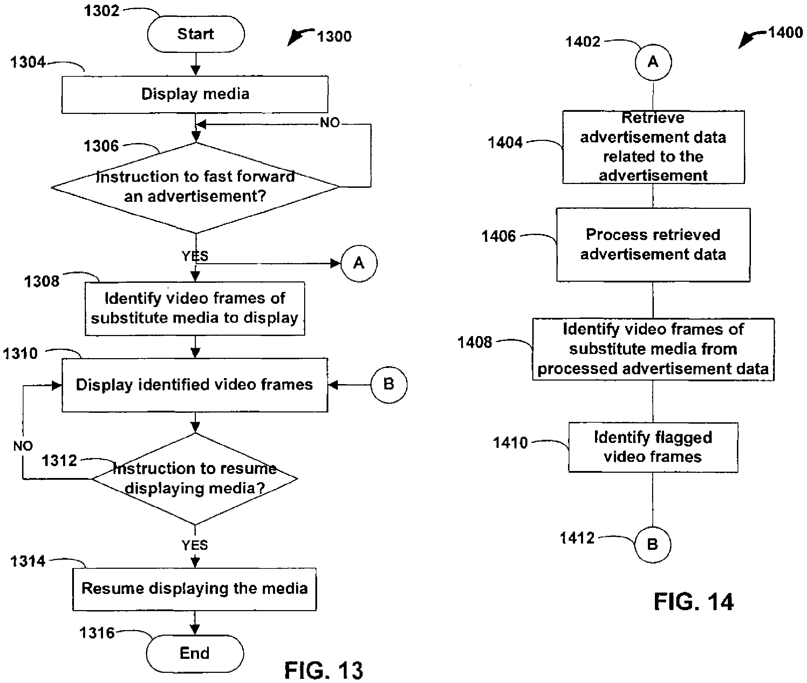

The following flow charts serve to illustrate processes involved in some embodiments of this invention. The flow charts describe processes primarily in the context of recorded programs (e.g., DVR and DVD programs). It will be understood, however, that these processes may also be applied to on-demand media and to media that is cached in a buffer. FIG. 13 is a flow chart of an illustrative process for displaying substitute media in response to a fast forward instruction. Process 1300 begins at step 1302. At step 1304, the interactive media guidance application displays media at playback speed (e.g., 1x rate). For example, the interactive media guidance application may play back a recording or an on-demand program. In particular, the interactive media guidance application may receive a user selection of a recorded program listing from user input device 114 (FIG. 1), and direct recording device 118 (FIG. 1) to provide the selected program to display device 112 (FIG. 1) for display. At this rate, the substitute media may be imperceptible to the user.

At step 1306, the interactive media guidance application determines whether an instruction to fast forward an advertisement in the media was provided.
For example, the interactive media guidance application may determine whether the user has pressed a fast forward key on user input device 114 or selected a fast forward option displayed on display device 112 while an advertisement was displayed. As another example, the user may select a fast forward function while watching the recorded program, and an advertisement may be encountered while the media is being fast forwarded. As another example, the interactive media guidance application may determine whether the auto fast forward function is enabled. If the interactive media guidance application determines that the user has not provided a fast forward instruction, process 1300 returns to step 1306 and continues to monitor whether an instruction to fast forward the displayed media has been provided.

If, at step 1306, the interactive media guidance application instead determines that an instruction to fast forward an advertisement was provided, process 1300 moves to step 1308. At step 1308, the interactive media guidance application identifies the video frames of the substitute media to display instead of the advertisement. For example, control circuitry 116 (FIG. 1) may retrieve advertisement data associated with advertisement (e.g., encoded in the VBI or side band of the recording, retrieved from a data stream that was recorded with the program, previously received and stored, or acquired by tuning to and receiving a data stream identified from a link or address for a data stream) that specifies the video frames of the substitute media. The process involved in this step is described in more detail in process 1400, FIG. 14.

At step 1310, the interactive media guidance application displays the video frames identified at step 1308. The interactive media guidance application may display the video frames using the configuration and other information provided by advertisement data associated with the advertisement. The identified configuration may include, for example, an overlay, a partial overlay, a PIP window, a banner ad, a panel ad, or any other suitable configuration.

At step 1312, the interactive media guidance application determines whether an instruction to resume displaying the media has been provided. For example, the interactive media guidance application may determine whether the user provided a play instruction using user input device 114. As another example, the interactive media guidance application may determine whether the advertisement is finished, and resume playback (e.g., if the auto-fast forward function is enabled). If the interactive media guidance application determines at step 1312 that an instruction to resume displaying the media at normal speed has not been provided, process 1300 returns to step 1310 and continues to display the substitute media (e.g., by fast forwarding the advertisement).

If, at step 1312, the interactive media guidance application instead determines that an instruction to resume displaying the media at normal speed has been provided, process 1300 moves to step 1314. At step 1314, the interactive media guidance application resumes displaying the media at normal speed. Process 1300 then ends at step 1316.

FIG. 14 is a flow chart of an illustrative process for identifying the video frames of substitute media. Process 1400 begins at step 1402, which may correspond to a step between steps 1306 and 1308 of process 1300 (FIG. 13). At step 1404, the interactive media guidance application retrieves advertisement data related to the advertisement for which an instruction to fast forward was received (e.g., the advertisement that was displayed when the instruction of step 1306 of process 1300 was received). In some embodiments, this step may be optional when the presence of substitute media may be transparent to the media guidance application. The interactive media guidance application may retrieve the advertisement data from any suitable location including, for example, a data stream (e.g., recorded or available upon request, such as an on-demand data stream), a side band, the VBI, from a subset of the advertisement, or any other suitable location.

The interactive media guidance application may retrieve the advertisement data at any suitable time. For example, in the case of recorded media, the interactive media guidance application may retrieve all of the advertisement associated with the fast forwarded advertisement as soon as the fast forward instruction is received. In other words, the interactive media guidance application retrieves all of the advertisement data before beginning or as it begins to fast forward the advertisement. This approach may be used when the advertisement data is provided in a data stream separate from the advertisement.

As another example, which may be applied to on-demand media, cached media, or recorded media, the interactive media guidance application may retrieve advertisement data as it progresses through the media. The interactive media guidance application may retrieve advertisement data from each video frame that the interactive media guidance application selects as it fast forwards the media, for example from in-band data or out-of-band data. This approach may allow the interactive media guidance application to retrieve advertisement data (and identify the video frames of substitute media, as discussed below) without requiring the entire media to be stored on the user's equipment (e.g., recorded on a DVR).

At step 1406, the interactive media guidance application processes the advertisement data retrieved at step 1404. For example control circuitry 110 (FIG. 1) may parse the retrieved advertisement data and identify the instructions and information of the data. In particular, the advertisement data may identify the specific video frames of the advertisement that include substitute media that is to be displayed in response to a fast forward instruction.

At step 1408, the interactive media guidance application identifies, from the advertisement data, the video frames of the substitute media. For example, the advertisement data may include references to specific video frames, frame counts for the substitute media, or any other suitable mechanism for identifying the video frames of the substitute media. The specific frames identified may also depend on the fast forward speed.

At step 1410, the interactive media guidance application identifies video frames of the advertisement that are flagged. This step of the process may take place in addition to or instead of steps 1404, 1406 and 1408 in embodiments where the video frames of an advertisement that are associated with substitute media are flagged. In particular, this approach may be implemented in the context of cached media and on-demand media.

Process 1400 then moves to step 1412, which corresponds to step 1310 of process 1300 (FIG. 13).

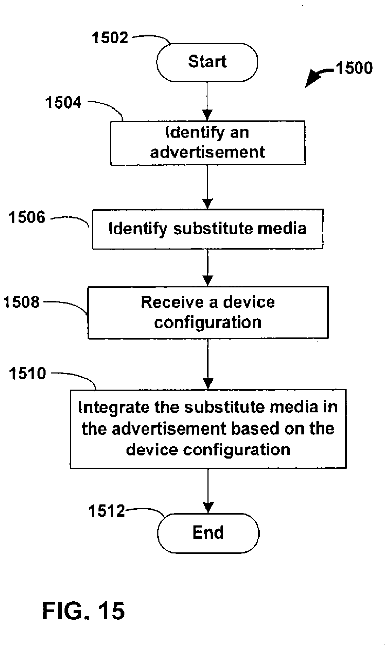

FIG. 15 is a flow chart of an illustrative process for constructing an advertisement that includes substitute media using an advertisement tool.
Process 1500 begins at step 1502. At step 1504, the advertisement tool identifies an advertisement. For example, the operator may select the video file of an advertisement on the system on which the advertisement tool is implemented (e.g., on a computer). At step 1506, the advertisement tool identifies substitute media. For example, the operator may select the video file of substitute media on the system on which the advertisement tool is implemented. As another example, the operator may identify one or more elements of the advertisement that the operator would like to have persist when the advertisement is fast forwarded. The substitute media may include a video, a graphic, an image, a logo, a video frame, an animated graphic, or any other suitable media or combination.

At step 1508, the advertisement tool receives a selection of a device configuration or set of device configurations from the operator. The device configuration may include a selection of firmware and hardware corresponding to a particular device used in an interactive media system (e.g., user's equipment 110).

At step 1510, the advertisement tool integrates the substitute media in the advertisement based on the selected device configuration such that when the user fast forwards the advertisement, the substitute media is displayed and perceptible to the user. The advertisement tool may integrate the substitute media in the advertisement using any suitable approach, including any of the approaches described above. For example, the advertisement tool may distribute the video frames of the substitute media as hidden frames in the advertisement (e.g., in a special separate component PID stream or in a modified GOP structure). As another example, the advertisement tool may modify the advertisement to incorporate elements that form substitute media in the advertisement (e.g. incorporate a graphic in the advertisement) such that the element is displayed and perceptible in response to a fast forward instruction.

The advertisement tool may select the video frames in which to insert the substitute media based on the selected device configuration. The advertisement tool may also select the video frames for inserting the substitute media based on one or more fast forward rates (e.g., 2x, 4x or 16x). The advertisement tool may include a preview feature for previewing the advertisement and the displayed substitute media when the advertisement is fast forwarded. Process 1500 then ends at step 1512.

The above described embodiments of the present invention are presented for purposes of illustration and not of limitation, and the present invention is limited only by the claims which follow. For example, this invention is described primarily in terms of an interactive media guidance application. However, it may be embodied within any other suitable type of application, such as a trick play application, a personal video recorder application, a video-on-demand application, a program guide application, or any other suitable application. This application also primarily describes substituting media while an advertisement is fast forwarded. In some embodiments, the substitution may be carried out in other trick play modes, such as while rewinding, within the spirit of this invention.

### THE FOLLOWING EMBODIMENTS ARE DISCLOSED:

1. A method for displaying substitute media during fast forward, comprising:
   playing back video stored at least partially on a storage device;
   receiving a user instruction to fast forward the video;
   identifying, in response to receiving the user instruction, the video frames of the video to display for fast forwarding the video; and
   displaying the identified video frames, wherein the identified video frames show substitute media that is perceptible to the user, and wherein the substitute media is not perceptible when the video is displayed at playback speed.
2. The method of item 1 wherein playing back video stored at least partially on a storage device comprises playing back video partially stored in a cache.
3. The method of item 1 wherein playing back video stored at least partially on a storage device comprises playing back a video entirely stored in a cache.
4. The method of item 1 wherein playing back video stored at least partially on a storage device comprises playing back a recording entirely stored in a recording device.
5. The method of item 1 wherein playing back video stored at least partially on a storage device comprises playing back an on-demand video entirely stored on a remote server.
6. The method of item 1 wherein:
   the video includes at least one advertisement; and
   receiving a user instruction to fast forward the video comprises receiving a user instruction to fast forward the at least one advertisement.
7. The method of item 1 wherein the identified video frames are hidden video frames.
8. The method of item 7 wherein the substitute media comprises an element that is present in the identified video frames.
9. The method of item 1 wherein the substitute media is one of an image, a still video frame image of the advertisement, a graphic, an icon, and a video clip.
10. The method of item 6 further comprising:
   retrieving advertisement data associated with the advertisement; and
   wherein identifying the video frames of the video comprises identifying the video frames that show the substitute media from the retrieved advertisement data.
11. The method of item 10 wherein retrieving advertisement data associated with the advertisement further comprises retrieving advertisement data from the video.
12. The method of item 10 wherein retrieving advertisement data associated with the advertisement further comprises retrieving advertisement data from a data stream associated with the video.
13. The method of item 10 wherein the advertisement data specifies a layout for displaying the substitute media.
14. A method for constructing an advertisement that includes substitute media that is perceptible when video is fast forwarded, comprising:
   identifying an advertisement;
   identifying substitute media; and
   incorporating the substitute media among the video frames of the advertisement by selecting video frames such that the substitute media is displayed and persists in the user's field of view sufficiently long so that the substitute media is perceptible when the user fast forwards the advertisement.
15. The method of item 14 further comprising:
   receiving selection of a device configuration; and
   wherein incorporating the substitute media among the video frames of the advertisement further comprises incorporating the substitute media among the video frames of the advertisement so that the substitute media is perceptible when the user fast forwards the advertisement with equipment having the selected device configuration.
16. The method of item 15, wherein the device configuration specifies at least one of firmware and hardware configurations for equipment used in an interactive media system.
17. The method of item 15, wherein the equipment is one of a set-top box, a recording device, a storage device, a personal computer, a television, a portable media device, and a cellular telephone.
18. The method of item 14, wherein incorporating the substitute media in the advertisement further comprises incorporating the substitute media in the advertisement by distributing the video frames of the substitute media in the advertisement as hidden frames.
19. The method of item 14, wherein incorporating the substitute media in the advertisement further comprises modifying the advertisement to incorporate at least one element of the substitute media in the video frames of the advertisement.
20. The method of item 14, wherein incorporating the substitute media in the advertisement further comprises automatically incorporating the substitute media in the advertisement.
21. The method of item 14 further comprising fast forwarding the advertisement with incorporated substitute media to preview the display of the substitute media.
22. A system for displaying substitute media during fast forward, comprising a storage device, a display device and control circuitry, the control circuitry configured to:
   direct the storage device to play back video stored at least partially on the storage device;
   receive a user instruction to fast forward the video;
   in response to receiving the user instruction, identify the video frames of the video to display for fast forwarding the video; and
   direct the display device to display the identified video frames, wherein the identified video frames show substitute media that is perceptible to the user, and wherein the substitute media is not perceptible when the video is displayed at playback speed.
23. The system of item 22 wherein the control circuitry is further configured to direct the storage device to play back video partially stored in a cache.
24. The system of item 22 wherein the control circuitry is further configured to direct the storage device to play back video entirely stored in a cache.
25. The system of item 22 wherein the control circuitry is further configured to direct the storage device to play back a recording entirely stored in a recording device.
26. The system of item 22 wherein the control circuitry is further configured to direct the storage device to play back on-demand video entirely stored on a remote server.
27. The system of item 22 wherein the video includes at least one advertisement and wherein the control circuitry is further configured to receive a user instruction to fast forward the at least one advertisement.
28. The system of item 22 wherein the identified video frames are hidden video frames.
29. The system of item 28 wherein the substitute media comprises an element that is present in the identified video frames.
30. The system of item 22 wherein the substitute media is one of an image, a still video frame image of the advertisement, a graphic, an icon, and a video clip.
31. The system of item 27 wherein the control circuitry is further configured to:
   retrieve advertisement data associated with the advertisement; and
   identify the video frames that show the substitute media from the retrieved advertisement data.
32. The system of item 31 wherein the control circuitry is further configured to retrieve advertisement data from the video.
33. The system of item 31 wherein the control circuitry is further configured to retrieve advertisement data from a data stream associated with the video.
34. The system of item 31 wherein the advertisement data specifies a layout for displaying the substitute media.
35. A system for constructing an advertisement that includes substitute media that is perceptible when video is fast forwarded, the system comprising a display device and control circuitry, the control circuitry configured to:
   identify an advertisement;
   identify substitute media; and
   incorporate the substitute media among the video frames of the advertisement by selecting video frames such that the substitute media is displayed and persists in the user's field of view sufficiently long so that the substitute media is perceptible when the user fast forwards the advertisement.
36. The system of item 35 wherein the control circuitry is further configured to:
   receive selection of a device configuration; and
   incorporate the substitute media among the video frames of the advertisement so that the substitute media is perceptible when the user fast forwards the advertisement with equipment having the selected device configuration.
37. The system of item 36, wherein the device configuration specifies at least one of firmware and hardware configurations for equipment used in an interactive media system.
38. The system of item 36, wherein the equipment is one of a set-top box, a recording device, a storage device, a personal computer, a television a portable media device, and a cellular telephone.
39. The system of item 35, wherein the control circuitry is further configured to incorporate the substitute media in the advertisement by distributing the video frames of the substitute media in the advertisement as hidden frames.
40. The system of item 35, wherein the control circuitry is further configured to modify the advertisement to incorporate at least one element of the substitute media in the video frames of the advertisement.
41. The system of item 35, wherein the control circuitry is further configured to automatically incorporate the substitute media in the advertisement.
42. The system of item 35, wherein the control circuitry is further configured to:
   fast forward the advertisement with substitute media; and
   direct the display device to display the fast forwarded advertisement to preview the display of the substitute media.

## Claims

1. A method for incorporating substitute media in a video, the method comprising:
providing a video object plane comprising the substitute media;
incorporating the video object plane comprising the substitute media in a video; and
distributing data identifying the video object plane and the video incorporating the substitute media to user equipment.

2. A method for displaying substitute media on user equipment, the method comprising:
receiving a video incorporating a video object plane comprising substitute media at the user equipment;
displaying the video on a screen with the video object plane occupying a small region of the screen;
in response to a fast forward instruction, identifying the video object plane comprising substitute media and scaling the video object plane to partially or completely fill the screen.

3. The method of claim 1 or claim 2, wherein the video is encoded using the MPEG-4 standard.

4. The method of any preceding claim, wherein the video is an advertisement.

5. The method of claim 1, further comprising fast forwarding the video with the incorporated substitute media to preview the display of the substitute media.

6. The method of claim 2, further comprising receiving advertisement data for identifying the video object plane comprising the substitute media.

7. The method of claim 6, wherein the advertisement data comprises a display configuration for the substitute media.

8. A system for incorporating substitute media in a video, the system comprising:
means for providing a video object plane comprising the substitute media;
means for incorporating the video object plane comprising the substitute media in a video; and
means for distributing data identifying the video object plane and the video incorporating the substitute media to user equipment.

9. A system for displaying substitute media on user equipment, the system comprising:
means for receiving a video incorporating a video object plane comprising substitute media at the user equipment;
means for displaying the video on a screen with the video object plane occupying a small region of the screen;
means for, in response to a fast forward instruction, identifying the video object plane comprising substitute media and scaling the video object plane to partially or completely fill the screen.

10. The system of claim 8 or claim 9, wherein the video is encoded using the MPEG-4 standard.

11. The system of any one of claims 8 to 10, wherein the video is an advertisement.

12. The system of claim 8, further comprising means for fast forwarding the video with the incorporated substitute media to preview the display of the substitute media.

13. The system of claim 9, further comprising means for receiving advertisement data for identifying the video object plane comprising the substitute media.

14. The system of claim 13, wherein the advertisement data comprises a display configuration for the substitute media.
